# EUROPÄISCHE PATENTSCHRIFT

(11) **EP 2 125 578 B1**
(45) Veröffentlichungstag und Bekanntmachung des Hinweises auf die Patenterteilung: **02.06.2010**
(21) Anmeldenummer: 08736089.7
(22) Anmeldetag: 10.04.2008
(51) Int. Cl.: B65G 1/04

(54) **VERFAHREN ZUR LAGERUNG VON LAGERGUT IN EINEM LAGERREGAL MIT MEHREREN REGALEINHEITEN UND EINEM TRANSPORTSCHACHT SOWIE EIN SOLCHES LAGERREGAL**
METHOD FOR THE STORAGE OF INVENTORY GOODS IN A STORAGE RACK COMPRISING A PLURALITY OF RACK UNITS AND A TRANSPORT SHAFT, AND SUCH A STORAGE RACK
PROCÉDÉ POUR LE STOCKAGE DE MARCHANDISES À STOCKER DANS UN RAYONNAGE DE STOCKAGE, COMPRENANT PLUSIEURS UNITÉS DE RAYONNAGE ET UN PUITS DE TRANSPORT, AINSI QU'UN TEL RAYONNAGE DE STOCKAGE

(30) Priorität: 12.04.2007 DE 102007017365
(43) Veröffentlichungstag der Anmeldung: 02.12.2009
(73) Patentinhaber: Hänel & CO., 9450 Altstätten (CH)
(72) Erfinder: HÄNEL, Joachim, 74177 Bad Friedrichshall (DE)
(74) Vertreter: Seidel, Marcus
(86) Internationale Anmeldenummer: PCT/EP2008/054371
(87) Internationale Veröffentlichungsnummer: WO 2008/125597

(56) Entgegenhaltungen:
- WO-A-2006/010550
- DE-U1- 29 512 722

## Beschreibung

Die vorliegende Erfindung betrifft ein Verfahren zur Lagerung von Lagergut in einem Lagerregal mit mehreren Regaleinheiten, die eine Vielzahl von Lagerplätzen für das Lagergut bereitstellen. Das Lagerregal umfasst einen Transportschacht, in dem eine Transportvorrichtung verfahrbar ist, um das Lagergut zwischen einer Bedienöffnung und einem Lagerplatz zu verfahren.

Es sind Lagerregale bekannt, die zwei Reihen von Regaleinheiten mit jeweils nebeneinander angeordneten Regalmodulen aufweisen, wobei zwischen den beiden Reihen ein Transportschacht vorgesehen ist, in dem eine Transportvorrichtung verfahrbar ist. In einer oder mehreren Regaleinheiten ist eine Bedienöffnung vorgesehen, durch die das Lagergut beziehungsweise ein Lagergutträger mit dem Lagergut bis in den Bereich des Transportschachts geschoben und von der Transportvorrichtung aufgenommen werden kann. Anschließend kann der Lagergutträger beziehungsweise das Lagergut mittels der Transportvorrichtung in Vertikalrichtung und/oder Horizontalrichtung bis zu dem gewünschten Lagerplatz verfahren und in den Lagerplatz geschoben werden. Um etwaige Leerfahrten der Transportvorrichtung zu reduzieren, sind Verbesserungen des Verfahrensablaufes erforderlich.

Aus der DE 203 17 901 U1 ist ein Lagerregal bekannt, wobei eine das Lagergut aufnehmende Abstellfläche der Transportvorrichtung in wenigstens zwei Flächenbereiche unterteilt ist und Mittel zur Drehung der Transportvorrichtung vorgesehen sind. Hierbei ergibt sich allerdings der Nachteil, dass die Drehung der Transportvorrichtung innerhalb des Transportschachts erfolgt und somit der Transportschacht eine größere Breite benötigt als für den eigentlichen Transport nötig. Ferner muss ein konstruktiv aufwendiges Mittel zur Drehung vorgesehen werden.

DE 295 12 722 U1 offenbart ein Lagerregal mit zwei Regalsäulen, die übereinander angeordnete Fächer aufweisen, wobei eine Regalsäule eine Beschickungs- und Entnahmeöffnung aufweist. Zwischen den Regalsäulen ist in einem Schacht ein Vertikalförderer angeordnet, der eine Horizontalfördereinrichtung aufweist, mit deren Hilfe jeweils ein Tablar aus einem der Fächer oder aus der Bedienöffnung auf den Vertikalförderer oder umgekehrt, beförderbar ist. Ferner ist die Bedienöffnung mit mindestens zwei übereinander angeordneten Führungen zur Aufnahme jeweils eines Tablars versehen. Auf diese Weise kann während der Zeit, in der ein Zugriff auf ein sich in der Bedienöffnung befindliches erstes Tablar erfolgt, ein zweites Tablar hinter der jeweils freien Führung bereitgestellt werden. Sobald das erste Tablar in einen Lagerplatz eingelagert worden ist, wird das zweite Tablar in die freie Führung geschoben.

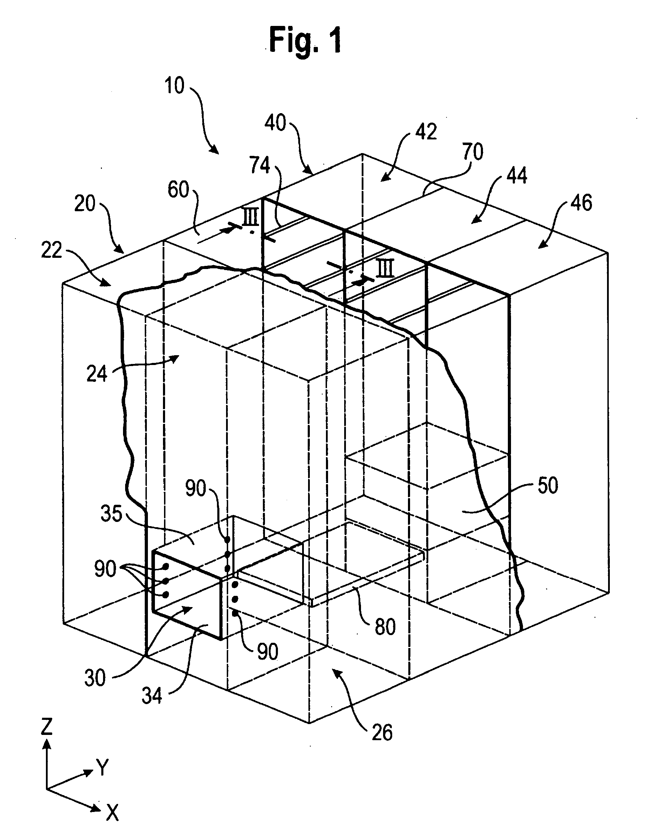

Schließlich offenbart die WO 2006/010550 A1 ein Lagersystem mit mehr als zwei, also wenigstens drei, hintereinander platzierten Regalsäulen, die durch jeweils einen Förderschacht voneinander getrennt sind. In dem Förderschacht ist jeweils ein Förderer zur Ausführung von vertikalen und horizontalen Bewegungen angeordnet. Durch jeden der Förderer sind sämtliche Lagerplätze der Regalsäulen beschickbar beziehungsweise entleerbar. Ferner können unter Ausnutzung freier Lagerplätze in den Regalsäulen die Lagergutträger in nachgeschaltete Regalsäulen eingelagert werden. Jeder Lagerplatz der zwischen zwei Förderschächten angeordneten Regalsäulen kann als Übergangskanal beziehungsweise Durchreiche genutzt werden. Um einen in der gemäß Fig. 1 hintersten Regalsäule befindlichen Behälter zu der Bedienöffnung zu verfahren, wird der Behälter zunächst von dem Förderer aus seinem Lagerplatz in der Regalsäule entnommen und in einen als "Durchreiche" dienenden leeren Lagerplatz eingelagert. Anschließend übernimmt der Förderer diesen Behälter aus dem Lagerplatz und transportiert diesen in den Bereich der Bedienöffnung. Die Förderer können unabhängig voneinander verfahren werden.

Weiterhin sind Lagerregale bekannt, bei denen die Bedienöffnung und die Verfahrensabläufe derart ausgestaltet sind, dass mehrere aus dem Lagerregal zu entnehmende Lagergutträger der Bedienöffnung zugeführt werden und sodann von dem Bedienpersonal aus der Bedienöffnung entnommen werden können. Problematisch hierbei ist, dass es bei einer Belegung der Bedienöffnung im unteren Bereich durch einen ersten Lagergutträger mit Lagergütern großer Höhe beim Zustellen eines zweiten Lagergutträgers von einem Lagerplatz in den oberen Bereich der Bedienöffnung zu einem Zusammenstoß kommen kann, da aufgrund der zu hohen Lagergüter des ersten Lagergutträgers zu wenig Raum in der Bedienöffnung verbleibt. Zudem befindet sich der zweite Lagergutträger in einer nicht ergonomischen Höhe, wodurch die Entnahme durch das Personal erschwert ist.

Der Erfindung liegt die **Aufgabe** zugrunde, ein Verfahren zur Lagerung von Lagergut in einem Lagerregal zu schaffen, bei dem die Handhabung zur Beschickung und Entnahme des Lagerguts unter Reduzierung des Zeitaufwandes verbessert wird. Ferner soll ein solches Lagerregal angegeben werden.

Zur **Lösung** dieser Aufgabe wird ein Verfahren gemäß Patentanspruch 1 vorgeschlagen.

Mit dem erfindungsgemäßen Verfahren können die Beschickungs- und Entnahmezeiten reduziert werden. Vorzugsweise befindet sich bei jedem der Verfahrensschritte immer nur ein Lagergut beziehungsweise Lagergutträger im Bereich der Bedienöffnung, wodurch es nicht zu einer Einschränkung der Lagerguthöhe kommt und alle Lagergutträger auf einer ergonomischen Höhe bearbeitet werden können. So können im Bereich der Bedienöffnung Zusammenstöße beispielsweise von mehreren zu entnehmenden Lagergutträgern oder Lagergütern vermieden werden, da kein zweiter Lagergutträger beziehungsweise kein zweites Lagergut in die Bedienöffnung verfahren wird. Insbesondere der in einer der Regaleinheiten vorgesehene Pufferbereich ermöglicht eine Entfernung des Lagerguts aus dem potentiellen Gefahrenbereich der Bedienöffnung und zwischenzeitliche Positionierung in dem Pufferbereich.

Im Rahmen der vorliegenden Anmeldung wird unter einer Regaleinheit vorzugsweise eine Regalsäule verstanden, die eine Vielzahl von übereinanderliegenden Lagerplätzen für jeweils einen Lagergutträger bereitstellt. Mehrere Regalsäulen können entlang einer Längsrichtung zur Bildung einer Regalreihe nebeneinander positioniert werden. Unter dem Begriff der Lagerung soll vorrangig die Beschickung und Entnahme des Lagerguts in beziehungsweise aus dem Lagerregal verstanden werden.

Soweit in der vorliegenden Anmeldung von Lagergut gesprochen wird, kann dieser Begriff ein einzelnes Lagergutelement oder eine Zusammenstellung von mehreren Lagergutelementen betreffen oder durch ein Lagergutträger, der das zu transportierende Lagergut enthält, ersetzt oder ergänzt werden. Daher kann beispielsweise das erste Lagergut eine erste Zusammenstellung von Lagergutelementen und das weiter unten noch erläuterte vierte Lagergut eine zweite Zusammenstellung von Lagergutelementen betreffen, wobei die zweite Zusammenstellung weniger oder mehr Lagergutelemente im Vergleich zur ersten Zusammenstellung umfasst. So kann beispielsweise das erste Lagergut nach Entnahme eines angeforderten Lagergutelementes im weiteren Verfahrensablauf als viertes Lagergut bezeichnet werden. Alternativ kann das vierte Lagergut auch eine völlig neue Zusammenstellung von Lagergutelementen, beispielsweise auch in einem anderen Lagergutträger, umfassen.

Vorteilhafte Weiterbildungen des erfindungsgemäßen Verfahrens sind in den Ansprüchen 2 bis 10 beansprucht.

Bei einer vorteilhaften Weiterbildung des Verfahrens ist der Pufferbereich vorzugsweise der zweiten Regaleinheit zugeordnet und im Wesentlichen auf der gleichen Höhe wie die Bedienöffnung vorgesehen. Mit anderen Worten ist der Pufferbereich in der zweiten Regaleinheit oder Regalsäule gegenüberliegend zur Bedienöffnung der ersten Regaleinheit beziehungsweise Regalsäule angeordnet. Auf diese Weise muss beispielsweise ein einzulagerndes Lagergut lediglich von der Bedienöffnung aus über den Transportschacht in die dahinter liegende Regaleinheit, das heißt im Wesentlichen in Horizontalrichtung, befördert werden. Alternativ kann der Pufferbereich auch der ersten Regaleinheit oder jeder weiteren Regaleinheit zugeordnet sein.

In vorteilhafter Weiterbildung stellt der Pufferbereich wenigstens zwei Pufferplätze bereit. Hierbei ist es nicht zwingend erforderlich eine räumliche Trennung der Pufferplätze, beispielsweise durch eine horizontale Trennwand, vorzusehen. Es kann demnach ausreichen, einen dementsprechend großen Freiraum für die wenigstens zwei Pufferplätze bereitzustellen. Beispielsweise können die Lagergutträger beziehungsweise die Lagergüter auf von den Seitenwänden der Regaleinheiten vorstehende Trägerauflagen geschoben werden.

Vorteilhafterweise weist der Pufferbereich eine Höhe auf, die etwa der zweifachen Höhe der vorgesehenen Maximalhöhe des Lagerplatzes entspricht. Diese Maximalhöhe des Lagerplatzes richtet sich nach dem Typus des Lagerregals, das heißt nach der Größe und dem Gewicht des Lagerguts, für welches das Lagerregal ausgelegt ist. Grundsätzlich kann der Pufferbereich auch eine Höhe aufweisen, die der mehrfachen Höhe dieser Maximalhöhe entspricht. Auf diese Weise kann vermieden werden, dass es im Pufferbereich zu einem Zusammenstoß beziehungsweise Crash von Lagergutträgern oder Lagergut kommt.

Ferner erweist es sich als vorteilhaft, wenn die Höhe des Lagerguts gemessen wird. Eine hierzu erforderliche Höhenmesseinrichtung wird vorzugsweise im Bereich der Bedienöffnung vorgesehen, so dass lediglich Lagergut in den Pufferbereich gelangt, dessen Höhe vorher gemessen worden ist. Vorteilhafterweise wird lediglich Lagergut mit einer vorbestimmten maximalen Höhe in den Pufferbereich befördert.

In einer weiteren bevorzugten Weiterbildung wird in einem Schritt f) ein drittes auszulagerndes Lagergut von seinem Lagerplatz mittels der Transportvorrichtung dem Pufferbereich zugeführt. Von Vorteil ist hierbei, wenn sich das dritte Lagergut in der näheren Umgebung des Lagerplatzes des zweiten Lagerguts befindet. Dies führt zu einer Zeitersparnis und reduziert den von der Transportvorrichtung zurückzulegenden Weg.

Weiterhin ist es von Vorteil, wenn in einem Schritt g) ein viertes einzulagerndes Lagergut über die Bedienöffnung der Transportvorrichtung zugeführt wird. Vorteilhafterweise wird Schritt g) nach Schritt f) durchgeführt, so dass die Transportvorrichtung lediglich im Bereich der Bedienöffnung und des Pufferbereiches für die Bewegung des Lagerguts betätigt werden muss.

Um die Bedienöffnung über kürzere oder längere Zeiten verschließen zu können, kann in einer vorteilhaften Weiterbildung zwischen zwei der oben genannten Schritte oder während mindestens einem dieser Schritte ein Schließelement, vorzugsweise ein Schnelllauftor, zum Öffnen und Schließen der Bedienöffnung geöffnet oder geschlossen werden.

Im Hinblick auf die Transportvorrichtung weist diese in einer vorteilhaften Ausgestaltung ein erstes Transportmittel und ein zweites Transportmittel auf, wobei das erste Transportmittel in einer Vertikalrichtung und das zweite Transportmittel in einer Horizontalrichtung verfahren wird. Hierbei ist es zur weiteren Einsparung von Transportzeiten von Vorteil, wenn das zweite Transportmittel auf dem ersten Transportmittel verfahren wird.

Ferner wird ein Lagerregal mit den Merkmalen des Anspruchs 10 zur Lösung der oben genannten Aufgabe angegeben. Ein derartiges Lagerregal macht sich die oben zu dem Verfahren erwähnten Vorteile zunutze.

Vorteilhafte Ausgestaltungen des erfindungsgemäßen Lagerregals sind in den Ansprüchen 11 bis 15 beschrieben.

Vorteilhafterweise ist der Pufferbereich in der zweiten Regaleinheit und im Wesentlichen auf der gleichen Höhe wie die Bedienöffnung vorgesehen. So können die zurückzulegenden Wege des ein- oder auszulagernden Lagerguts und damit die Kommissionierzeiten reduziert werden. Bevorzugt umfasst der Pufferbereich wenigstens zwei Pufferplätze. Ferner ist es von Vorteil, wenn der Pufferbereich eine Höhe aufweist, die der mehrfachen Höhe, insbesondere etwa der zweifachen Höhe, der vorgesehenen Maximalhöhe des Lagerplatzes entspricht. Bei diesen vorteilhaften Ausgestaltungen ergeben sich die oben im Zusammenhang mit dem Verfahren erwähnten Vorteile.

In bevorzugter Ausgestaltung ist im Bereich der Bedienöffnung eine Höhenmesseinrichtung zur Erfassung der Höhe des Lagerguts vorgesehen. Eine solche Höhenmesseinrichtung kann die Anzahl der für die Lagerung des Lagerguts notwendigen Höheneinheiten ermitteln. Vorteilhafterweise wird das Messsignal der Höhenmesseinrichtung einer Steuereinheit zugeführt, die in Abhängigkeit von der Höhe des Lagerguts und der Belegung des Lagerregals das Lagergut und/oder den Lagergutträger mittels der Transportvorrichtung zu einem geeigneten Lagerplatz verfährt und zustellt. Die Höhenmesseinrichtung kann im Bereich des äußeren Endes der Bedienöffnung, das heißt im Bereich der Außenseite der ersten Regaleinheit, oder im Bereich des inneren Endes der Bedienöffnung, das heißt etwa benachbart zu dem Transportschacht, angeordnet sein.

Um die Bedienöffnung temporär oder permanent verschließen zu können, kann ein Schließelement, vorzugsweise ein Schnelllauftor, zum Öffnen und Schließen der Bedienöffnung vorgesehen werden. Vorzugsweise ist das Schließelement an einem inneren Ende der Bedienöffnung beziehungsweise an der Innenseite der ersten Regaleinheit vorgesehen.

Bei einer weiteren bevorzugten Ausgestaltung umfasst die Transportvorrichtung ein erstes Transportmittel und ein zweites Transportmittel, wobei das erste Transportmittel in einer Vertikalrichtung und das zweite Transportmittel in einer Horizontalrichtung verfahrbar ist. Auf diese Weise kann ein Transport in Vertikalrichtung und gleichzeitig in Horizontalrichtung erfolgen. In vorteilhafter Weise stützt sich das zweite Transportmittel auf dem ersten Transportmittel ab. Hierzu können Führungseinrichtungen wie Schienen und/oder Räder vorgesehen werden.

Schließlich ist es von Vorteil, wenn die Regaleinheiten übereinander liegende und beabstandete Trägerauflagen aufweisen, die paarweise an sich gegenüberliegenden Seitenwänden der Regaleinheiten zur Bildung eines Lagerplatzes für das Lagergut und/oder die Lagergutträger angeordnet sind. Eine derartige Ausgestaltung der Regaleinheit auch in dem Pufferbereich ermöglicht es beispielsweise zwei oder mehr Pufferplätze auszubilden, ohne dass eine räumliche Trennung der Pufferplätze vorgesehen werden muss.

Nachfolgend wird die Erfindung unter Bezugnahme auf die Zeichnungen weiter erläutert. Dabei zeigen schematisch:
- Fig. 1: eine perspektivische Darstellung des erfindungsgemäßen Lagerregals;
- Fig. 2: einen Horizontalschnitt durch das Lagerregal gemäß Fig. 1;
- Fig. 3: einen Querschnitt gemäß der Linie III - III in Fig. 1 durch die Seitenwände zweier benachbarter Regalmodule des Lagerregals;
- Fig. 4 bis 11: schematische Darstellung der Verfahrensschritte des erfindungsgemäßen Verfahrens zur Lagerung von Lagergut in dem Lagerregal gemäß den Figuren 1 bis 3.

Fig. 1 zeigt den schematischen Aufbau eines erfindungsgemäßen Lagerregals 10 mit zwei Reihen mit jeweils drei nebeneinander angeordneten Regalmodulen. Die Regalmodule 22, 24, 26 bilden eine erste Regaleinheit 20. Die Regalmodule 42, 44, 46 bilden eine zweite Regaleinheit 40. Jedes der Regalmodule 22 bis 26 und 42 bis 46 stellt eine Vielzahl von übereinander angeordneten Lagerplätzen zur Aufnahme von Lagergut bereit. In einer alternativen Ausgestaltung kann die erste Regaleinheit 20 nur das Regalmodul 24 und die zweite Regaleinheit 40 nur das Regalmodul 44 umfassen.

Zwischen den beiden Regaleinheiten 20 und 40 ist ein Transportschacht 60 vorgesehen, in dem eine Transportvorrichtung 80 in einer ersten Horizontalrichtung X, einer zweiten Horizontalrichtung Y und in einer Vertikalrichtung Z verfahrbar ist. Vorzugsweise wird das ein- und auszulagernde Lagergut mittels Lagergutträgern oder Containern transportiert und gelagert.

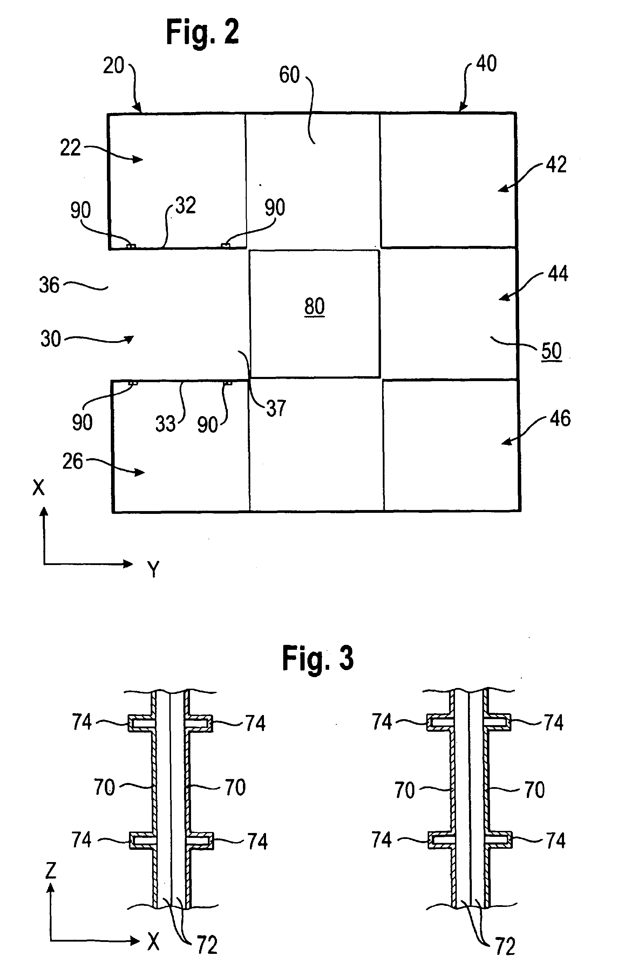

Zur Lagerung des Lagerguts oder des Lagergutträgers in den einzelnen Lagerplätzen weisen die Regalmodule 22 bis 26 und 42 bis 46 Seitenwände 70 mit paarweise gegenüberliegenden Trägerauflagen 74 auf (siehe insbesondere Fig. 3). Die aus Stahlblech gebildeten Seitenwände 70 sind jeweils an Ständer 72 angeschweißt.

Wie insbesondere aus Fig. 3 hervorgeht, sind die Trägerauflagen 74 in der jeweiligen Seitenwand 70 integriert und in diese mäanderförmig eingepresst. Dadurch wird eine vergleichsweise steife Ausbildung der Seitenwände 70 gewährleistet. Um ein leichtes Einführen der Lagergutträger in die Lagerplätze zu ermöglichen, weisen die Trägerauflagen 74 an der zum Transportschacht 60 gerichteten Seite einen sich verjüngenden Querschnitt auf.

Weiterhin geht aus den Fig. 1, 2 und 4 bis 11 eine Bedienöffnung 30 in dem Regalmodul 24 hervor, um das Lagerregal 10 mit dem Lagergut beschicken beziehungsweise das Lagergut aus dem Lagerregal 10 entnehmen zu können. Die Beschickung und/oder Entnahme des Lagerguts im Bereich der Bedienöffnung 30 kann händisch durch das Bedienpersonal oder vollautomatisch erfolgen. Gegebenenfalls kann im Außenbereich vor der Bedienöffnung 30 eine Übergabeeinheit vorgesehen werden, die das einzulagernde Lagergut von einem Förderband übernimmt oder das auszulagernde Lagergut dem Förderband zuführt.

Die Bedienöffnung 30 bildet einen Freiraum innerhalb der ersten Regaleinheit 20, der durch die beiden Seitenwände 32, 33, eine Ablagefläche 34 und eine Deckenfläche 35 begrenzt ist. Die Ablagefläche 34 dient zur Ablage von Lagergut oder Lagergutträgern in der Bedienöffnung 30. Die Bedienöffnung 30 weist in einer Horizontalrichtung Y betrachtet ein zur Außenseite des Lagerregals 10 gerichtetes äußeres Ende 36 und ein zum Transportschacht 60 gerichtetes inneres Ende 37 auf. Die Bedienöffnung 30 ermöglicht es ein einzulagerndes Lagergut durch die erste Regaleinheit 20 der Transportvorrichtung 80 zu zuführen. Anschließend kann die Transportvorrichtung 80 das einzulagernde Lagergut dem gewünschten Lagerplatz in einer der Regalmodule 22 bis 26 und 42 bis 46 zustellen. Gleichermaßen kann die Transportvorrichtung 80 ein in einem Lagerplatz gelagertes auszulagerndes Lagergut aufzunehmen und über den Transportsschacht 60 der Bedienöffnung 30 zustellen.

Um den Transport des Lagerguts in der ersten Horizontalrichtung X, der zweiten Horizontalrichtung Y und der Vertikalrichtung Z zu ermöglichen, kann die Transportvorrichtung 80 ein erstes Transportmittel und ein zweites Transportmittel aufweisen (nicht dargestellt). Hierbei ist es von Vorteil, wenn das erste Transportmittel in der Vertikalrichtung Z verfahrbar und das zweite Transportmittel auf dem ersten Transportmittel abgestützt und in der ersten Horizontalrichtung X verfahrbar ist. Ferner kann das zweite Transportmittel eingerichtet sein, um das Lagergut in der zweiten Horizontalrichtung Y zu bewegen, das heißt insbesondere um das Lagergut aus einem Lagerplatz entfernen und/oder der Bedienöffnung 30 zuführen zu können. Diese Aufgabe kann auch von einem weiteren Transportmittel, das beispielsweise auf dem zweiten Transportmittel abgestützt ist, durchgeführt werden. Diese Konstellation mit mehreren Transportmitteln zur Bildung der Transportvorrichtung 80 ermöglicht es, das Lagergut innerhalb des Transportschachtes 60 gleichzeitig in mehreren Richtungen zu transportieren.

Wie insbesondere aus dem Horizontalschnitt auf Höhe der Bedieneinheit gemäß Fig. 2 zu erkennen, ist in der zweiten Regaleinheit 40 in dem Regalmodul 44 ein Pufferbereich 50 vorgesehen. Der Pufferbereich 50 ist im Wesentlichen auf der gleichen Höhe bezüglich der Vertikalrichtung Z wie die Bedienöffnung 30 angeordnet. Der Pufferbereich 50 weist eine Höhe h₂ auf, die der zweifachen Höhe der vorgesehenen Maximalhöhe eines Lagerplatzes des Lagerregals 10 entspricht. Im vorliegenden Fall stellt der Pufferbereich 50 zwei Pufferplätze 52, 54 bereit, wobei der Pufferplatz 52 in dem Pufferbereich 50 untenliegend und der Pufferplatz 54 in dem Pufferbereich 50 obenliegend vorgesehen ist.

Um ein Verschließen der Bedienöffnung 30 zu ermöglichen, kann ein Schließelement 100 in Form eines Schnellauftores an der Innenseite der ersten Regaleinheit 20, das heißt im Bereich des inneren Endes 37, vorgesehen sein, um die Bedienöffnung 30 öffnen und schließen zu können. Ferner ist im Bereich der Bedienöffnung 30 eine Höhenmesseinrichtung 90 zu Erfassung der Höhe des Lagerguts vorgesehen. Hierzu umfasst die Höhenmesseinrichtung 90 im Bereich des inneren Endes 37 und im Bereich des äußeren Endes 36 jeweils mehrere übereinander angeordnete Lichtschranken um die Höhe des einzulagernden beziehungsweise auszulagernden Lagerguts bestimmen zu können. Um eine optimale Lagerplatznutzung zu erreichen, ermittelt oben erwähnte Steuereinheit einen oder mehrere geeignete Lagerplätze und steuert die Transportvorrichtung 80 entsprechend an, um das Lagergut zu dem von der Steuereinheit ermittelten Lagerplatz zu transportieren.

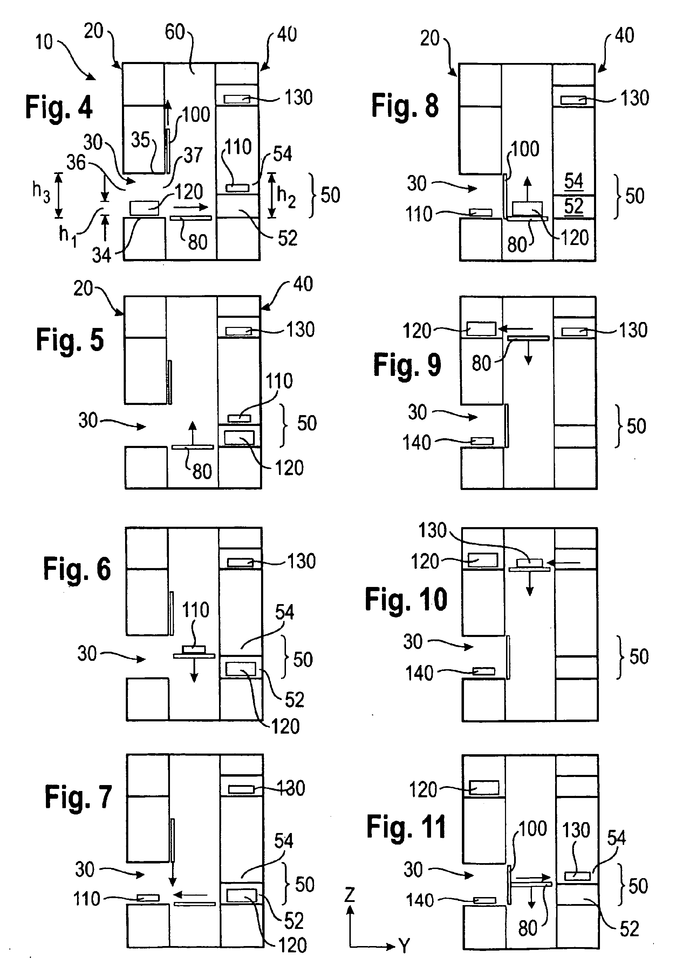

Nachfolgend wird ein Verfahren zur Lagerung von Lagergut, das heißt zur Beschickung und/oder Entnahme von Lagergut in das beziehungsweise aus dem Lagerregal 10, anhand der in den Fig. 4 bis 11 schematisch dargestellten aufeinander folgenden Verfahrensschritte beschrieben.

In einem ersten Verfahrensschritt wird ein erstes auszulagerndes Lagergut 110 von der Transportvorrichtung 80 von seinem Lagerplatz in den Pufferbereich 50 der zweiten Regaleinheit 40 befördert. Fig. 4 zeigt bereits die Situation nach Abschluss dieses Verfahrensschrittes, bei dem sich das erste Lagergut 110 im Bereich des oberen Pufferplatzes 54 des Pufferbereichs 50 befindet. Zur Verdeutlichung der Transportwege sind in den Fig. 4 bis 11 entsprechende Pfeile dargestellt.

Anschließend übernimmt die Transportvorrichtung 80 ein zweites einzulagerndes Lagergut 120 aus der Bedienöffnung 30. Dieser Vorgang kann vor dem oben erwähnten ersten Verfahrensschritt, währenddessen oder anschließend erfolgen. Nachdem das zweite Lagergut 120 von der Transportvorrichtung 80 aufgenommen worden ist und sich innerhalb des Transportschachtes 60 befindet, wird es von der Transportvorrichtung 80 in den Pufferbereich 50 befördert und dem unteren Pufferplatz 52 zugestellt (siehe Fig. 4 und 5).

Im Anschluss daran wird die Transportvorrichtung 80 von der in Fig. 5 gezeigten Stellung auf Höhe des unteren Pufferplatzes 52 in die in Fig. 6 gezeigte Stellung auf Höhe des oberen Pufferplatzes 54 verfahren. Nun nimmt die Transportvorrichtung 80 das erste Lagergut 110 auf und befördert es, wie sich aus einer Zusammenschau der Fig. 6 und 7 ergibt, in den Bereich der Bedienöffnung 30.

Anschließend kann die Transportvorrichtung 80 das zweite Lagergut 120 aus dem Pufferplatz 52 heraus aufnehmen und einem geeigneten Lagerplatz zuführen (siehe Fig. 7 und 8). Wie Fig. 9 zeigt, befindet sich im vorliegenden Fall der geeignete Lagerplatz in einem oberen Bereich des Regalmoduls 24 der ersten Regaleinheit 20 etwa gegenüberliegend von einem in dem Regalmodul 44 der zweiten Regaleinheit 40 gelagerten dritten Lagergut 130. Mit anderen Worten ist der Lagerplatz für das zweite Lagergut 120 einerseits auf die Höhe des einzulagernden Lagerguts 120, andererseits aber auch auf das nachfolgend auszulagernde dritte Lagergut 130 abgestimmt.

So kann in einem darauffolgenden Schritt das dritte Lagergut 130 von seinem Lagerplatz mittels der Transportvorrichtung 80 entnommen (siehe Fig. 10) und dem Pufferplatz 54 des Pufferbereichs 50 zugestellt werden (siehe Fig. 11).

Währenddessen kann das angeforderte Lagergutelement aus der Zusammenstellung der Lagergutelemente des Lagerguts 110 entnommen werden. Das nun ein Lagergutelement weniger umfassende Lagergut 110 wird nun als viertes Lagergut 140 bezeichnet werden. Alternativ kann das vierte Lagergut 140 auch eine völlig neue Zusammenstellung von Lagergutelementen in einem anderen Lagergutträger umfassen.

Um nun das vierte Lagergut 140 einzulagern, wird es in entsprechender Weise wie das oben erwähnte zweite einzulagernde Lagergut 120 der Bedienöffnung 30 zugeführt oder ist dort noch vorhanden (siehe beispielsweise Fig. 9). Mit anderen Worten entspricht die in Fig. 11 gezeigte Situation mit dem dritten auszulagernden Lagergut 130 im Bereich des oberen Pufferplatzes 54 und mit dem vierten einzulagernden Lagergut 140 im Bereich der Bedienöffnung 30 der in Fig. 4 gezeigten Situation. Hierbei entspricht beim Vergleich der Fig. 4 und 11 das zweite Lagergut 120 dem vierten Lagergut 140 und das erste Lagergut 110 entspricht dem dritten Lagergut 130. Somit beginnt mit der in Fig. 11 gezeigten Situation ein neuer Verfahrenszyklus und läuft wiederum entsprechend den Fig. 4 bis 11 in gleicher Weise ab.

In Fig. 4 sind mehrere Höhenabmessungen zu erkennen, die auch für die weiteren Figuren 5 bis 11 entsprechend gelten, wobei die Höhe h₁ eine Höhe des Lagerguts 110 bis 140 bezeichnet. Entsprechend dieser von der Höhenmesseinrichtung 90 gemessenen Höhe h₁ ermittelt die Steuereinheit einen geeigneten Lagerplatz ausreichender Höhe. Eine Höhe h₃ der Bedienöffnung beträgt im Wesentlichen die für den vorliegenden Lagerregaltyp bestimmte Maximalhöhe des einzulagernden Lagerguts. Wie bereits oben erwähnt, weist der Pufferbereich 50 eine Höhe h₂ auf, die etwa der zweifachen Höhe der vorgesehen Maximalhöhe des Lagerplatzes entspricht. Mit anderen Worten weist der Pufferbereich 50 eine ausreichende Höhe h₂ auf, um zwei Pufferplätze 52, 54 bereitzustellen. Jeder Pufferplatz 52, 54 könnte also jeweils ein Lagergut mit Maximalhöhe aufnehmen. Bei Bedarf kann die Höhe h₂ ein Vielfaches der Maximalhöhe des Lagerguts betragen.

Weiterhin kann, wie in den Fig. 4 bis 11 in geschlossener oder geöffneter Stellung angedeutet, ein Schließelement 100 vorgesehen werden. Vorzugsweise wird das Schließelement 100 zwischen zwei Schritten oder während mindestens einem der Verfahrensschritte geöffnet oder geschlossen. Das Öffnen und Schließen kann ebenfalls von der Steuereinheit gesteuert werden.

Das beschriebene Verfahren zeichnet sich insbesondere dadurch aus, dass die Beschickungs- und Entnahmevorgänge zeitsparend aufeinander abgestimmt sind, wobei ein Zusammenstoß von dem einzulagernden Lagergut 120 oder 130 mit dem auszulagernden Lagergut 110 oder 140 vermieden werden kann. Zudem werden zu keinem Zeitpunkt mehrere Lagergüter beziehungsweise Lagergutträger im Bereich der Bedienöffnung 30 positioniert. Auf diese Weise ist im Bereich der Bedienöffnung 30 maximal immer nur ein Lagergut vorhanden, so dass die Höhenlage der Bedienöffnung 30 in ergonomischer Hinsicht optimiert werden kann. Ferner kann die erforderliche Höhe der Bedienöffnung 30 auf die Maximalhöhe des einzulagernden Lagerguts für den jeweiligen Lagerregaltyp reduziert werden, wodurch auch nur eine dementsprechend dimensionierte Höhenmesseinrichtung erforderlich ist. Dadurch dass nur Lagergut mit gemessener Höhe in den Pufferbereich 50 verfahren wird, wird auch in dem Pufferbereich 50 ein Crash vermieden. Darüber hinaus kann die Verfahrensdauer für den Verfahrenszyklus eines Lagergutwechsels und auch die Nachschubzeit für ein neu einzulagerndes Lagergut reduziert werden.

### Bezugszeichenliste

- 10: Lagerregal

- 20: erste Regaleinheit
- 22: Regalmodul
- 24: Regalmodul
- 26: Regalmodul

- 30: Bedienöffnung
- 32: Seitenwand
- 33: Seitenwand
- 34: Ablagefläche
- 35: Deckenfläche
- 36: äußeres Ende
- 37: inneres Ende

- 40: zweite Regaleinheit
- 42: Regalmodul
- 44: Regalmodul
- 46: Regalmodul

- 50: Pufferbereich
- 52: Pufferplatz
- 54: Pufferplatz

- 60: Transportschacht

- 70: Seitenwand
- 72: Ständer
- 74: Trägerauflagen

- 80: Transportvorrichtung

- 90: Höhenmesseinrichtung

- 100: Schließelement

- 110: erstes Lagergut
- 120: zweites Lagergut
- 130: drittes Lagergut
- 140: viertes Lagergut

- h₁: Höhe Lagergut
- h₂: Höhe Pufferbereich
- h₃: Höhe Bedienöffnung

- X: erste Horizontalrichtung
- Y: zweite Horizontalrichtung
- Z: Vertikalrichtung

## Patentansprüche

1. Verfahren zur Lagerung von Lagergut (110, 120, 130, 140) in einem Lagerregal (10) mit mehreren Regaleinheiten (20, 40), die eine Vielzahl von Lagerplätzen für das Lagergut (110, 120, 130, 140) bereitstellen, und mit einem Transportschacht (60), in dem eine Transportvorrichtung (80) verfahrbar ist, um das Lagergut (110, 120, 130, 140) zwischen einer Bedienöffnung (30) und einem Lagerplatz zu transportieren, wobei eine erste Regaleinheit (20) die Bedienöffnung (30) aufweist und eine zweite Regaleinheit (40) durch den Transportschacht (60) von der ersten Regaleinheit (20) beabstandet ist, und wobei das Verfahren folgende Schritte umfasst:
a) ein erstes auszulagerndes Lagergut (110) wird zur Zwischenlagerung von der Transportvorrichtung (80) in einen von der Bedienöffnung (30) beabstandeten Pufferbereich (50) einer Regaleinheit (20, 40) befördert;
b) ein zweites einzulagerndes Lagergut (120) wird über die Bedienöffnung (30) der Transportvorrichtung (80) zugeführt;
c) das zweite einzulagernde Lagergut (120) wird von der Transportvorrichtung (80) in den Pufferbereich (50) befördert;
d) das erste auszulagernde Lagergut (110) wird mittels der Transportvorrichtung (80) von dem Pufferbereich (50) der Bedienöffnung (30) zugeführt, und
e) das zweite einzulagernde Lagergut (120) wird mittels der Transportvorrichtung (80) von dem Pufferbereich (50) einem vorbestimmten Lagerplatz zugeführt.

2. Verfahren nach Anspruch 1, **dadurch gekennzeichnet, dass** der Pufferbereich (50) der zweiten Regaleinheit (40) zugeordnet und im Wesentlichen auf der gleichen Höhe wie die Bedienöffnung (30) vorgesehen ist.

3. Verfahren nach Anspruch 1 oder 2, **dadurch gekennzeichnet, dass** der Pufferbereich (50) wenigstens zwei Pufferplätze (52, 54) bereitstellt.

4. Verfahren nach einem der Ansprüche 1 bis 3, **dadurch gekennzeichnet, dass** der Pufferbereich (50) eine Höhe (h₂) aufweist, die etwa der zweifachen Höhe der vorgesehenen Maximalhöhe des Lagerplatzes entspricht.

5. Verfahren nach einem der Ansprüche 1 bis 4, **dadurch gekennzeichnet, dass** die Höhe (h₁) des Lagerguts (110, 120, 130, 140) gemessen wird.

6. Verfahren nach einem der Ansprüche 1 bis 5, **dadurch gekennzeichnet, dass** in einem Schritt f) ein drittes auszulagerndes Lagergut (130) von seinem Lagerplatz mittels der Transportvorrichtung (80) dem Pufferbereich (50) zugeführt wird.

7. Verfahren nach einem der Ansprüche 1 bis 6, **dadurch gekennzeichnet, dass** in einem Schritt g) ein viertes einzulagerndes Lagergut (140) über die Bedienöffnung (30) der Transportvorrichtung (80) zugeführt wird.

8. Verfahren nach einem der Ansprüche 1 bis 7, **dadurch gekennzeichnet, dass** zwischen zwei Schritten oder während mindestens einem der Schritte ein Schließelement (100), vorzugsweise ein Schnelllauftor, zum Öffnen und Schließen der Bedienöffnung (30) geöffnet oder geschlossen wird.

9. Verfahren nach einem der Ansprüche 1 bis 8, **dadurch gekennzeichnet, dass** die Transportvorrichtung (80) ein erstes Transportmittel und ein zweites Transportmittel umfasst, wobei das erste Transportmittel in einer Vertikalrichtung (Z) und das zweite Transportmittel in einer Horizontalrichtung (X) verfahren wird.

10. Lagerregal (10) mit mehreren Regaleinheiten (20, 40); die eine Vielzahl von Lagerplätzen zur Lagerung von Lagergut (110, 120, 130, 140) bereitstellen, und mit einem Transportschacht (60), in dem eine Transportvorrichtung (80) verfahrbar ist, um das Lagergut zwischen einer Bedienöffnung (30) und einem Lagerplatz zu transportieren, wobei eine erste Regaleinheit (20) die Bedienöffnung (30) aufweist und eine zweite Regaleinheit (40) durch den Transportschacht (60) von der ersten Regaleinheit (20) beabstandet ist, **dadurch gekennzeichnet, dass** eine Regaleinheit (20, 40) einen von der Bedienöffnung (30) beabstandeten Pufferbereich (50) zur Zwischenlagerung von Lagergut (110, 120, 130, 140) aufweist, wobei der Pufferbereich (50) in der zweiten Regaleinheit (40) und im Wesentlichen auf der gleichen Höhe wie die Bedienöffnung (30) vorgesehen ist und wobei der Pufferbereich (50) wenigstens zwei Pufferplätze (52, 54) umfasst.

11. Lagerregal (10) nach Anspruch 10, **dadurch gekennzeichnet, dass** der Pufferbereich (50) eine Höhe (h₂) aufweist, die etwa der zweifachen Höhe der vorgesehenen Maximalhöhe des Lagerplatzes entspricht.

12. Lagerregal (10) nach einem der Ansprüche 10 oder 11, **dadurch gekennzeichnet, dass** im Bereich der Bedienöffnung (30) eine Höhenmesseinrichtung (90) zur Erfassung der Höhe (h₁) des Lagerguts (110, 120, 130, 140) vorgesehen ist.

13. Lagerregal (10) nach einem der Ansprüche 10 bis 12, **dadurch gekennzeichnet, dass** ein Schließelement (100), vorzugsweise ein Schnelllauftor, zum Öffnen und Schließen der Bedienöffnung (30) vorgesehen ist.

14. Lagerregal (10) nach einem der Ansprüche 10 bis 13, **dadurch gekennzeichnet, dass** die Transportvorrichtung (80) ein erstes Transportmittel und ein zweites Transportmittel umfasst, wobei das erste Transportmittel in einer Vertikalrichtung (Z) und das zweite Transportmittel in einer Horizontalrichtung (X) verfahrbar ist.

15. Lagerregal (10) nach einem der Ansprüche 10 bis 14, **dadurch gekennzeichnet, dass** die Regaleinheiten (20, 40) übereinander liegende und beabstandete Trägerauflagen (74) aufweisen, die paarweise an sich gegenüberliegenden Seitenwänden (70) der Regaleinheiten (20, 40) zur Bildung eines Lagerplatzes für das Lagergut angeordnet sind.

## Claims

1. A method of storing storage products (110, 120, 130, 140) in a storage rack (10), comprising several rack units (20, 40) providing a plurality of storage spaces for the storage products (110, 120, 130, 140), and a transport shaft (60), in which a transport device (80) is traversable to transport the storage products (110, 120, 130, 140) between a service opening (30) and a storage space, wherein a first rack unit (20) includes the service opening (30) and a second rack unit (40) is spaced from the first rack unit (20) by the transport shaft (60), and wherein the method comprises the following steps:
a) conveying a first storage product (110) to be withdrawn by means of the transport device (80) to a buffer area (50), spaced from the service opening (30), of a rack unit (20, 40) for intermediate storage;
b) supplying a second storage product (120) to be stored to the transport device (80) via the service opening (30);
c) conveying the second storage product (120) to be stored to the buffer area (50) by means of the transport device (80);
d) supplying the first storage product (110) to be withdrawn from the buffer area (50) to the service opening (30) by means of the transport device (80), and
e) supplying the storage product (120) to be stored from the buffer area (50) to a predetermined storage space by means of the transport device (80).

2. The method according to claim 1, **characterised in that** the buffer area (50) is associated with the second rack unit (40) and is provided essentially at the same height as the service opening (30).

3. The method according to claim 1 or 2, **characterised in that** the buffer area (50) provides at least two buffer spaces (52, 54).

4. The method according to any one of claims 1 to 3, **characterised in that** the buffer area (50) has a height (h₂) that corresponds to about twice the height of the predetermined maximum height of the storage space.

5. The method according to any one of claims 1 to 4, **characterised in that** the height (h₁) of the storage product (110, 120, 130, 140) is measured.

6. The method according to any one of claims 1 to 5, **characterised in that**, in a step f), a third storage product (130) to be withdrawn is supplied from its storage space to the buffer area (50) by means of the transport device (80).

7. The method according to any one of claims 1 to 6, **characterised in that**, in a step g), a fourth storage product (140) to be stored is supplied to the transport device (80) via the service opening (30).

8. The method according to any one of claims 1 to 7, **characterised in that** a closure element (100), preferably a high speed door, for opening and closing the service opening (30) is opened or closed between two steps or during at least one of the steps.

9. The method according to any one of claims 1 to 8, **characterised in that** the transport device (80) comprises a first transporting means and a second transporting means, wherein the first transporting means is traversed in a vertical direction (Z) and the second transporting means is traversed in a horizontal direction (X).

10. A storage rack (10), comprising several storage units (20, 40) providing a plurality of storage spaces for storing storage products (110, 120, 130, 140), and a transport shaft (60), in which a transport device (80) is traversable to transport the storage products between a service opening (30) and a storage space, wherein a first rack unit (20) includes the service opening (30) and a second rack unit (40) is spaced from the first rack unit (20) by the transport shaft (60), **characterised in that** a rack unit (20, 40) includes a buffer area (50) spaced from the service opening (30) for the intermediate storage of storage products (110, 120, 130, 140), wherein the buffer area (50) is provided in the second rack unit (40) and essentially at the same height as the service opening (30), and wherein the buffer area (50) comprises at least two buffer spaces (52, 54).

11. The storage rack (10) according to claim 10, **characterised in that** the buffer area (50) has a height (h₂) that corresponds to about twice the height of the predetermined maximum height of the storage space.

12. The storage rack (10) according to claim 10 or 11, **characterised in that** a height measuring device (90) for detecting the height (h₁) of the storage product (110, 120, 130, 140) is provided in the area of the service opening (30).

13. The storage rack (10) according to any one of claims 10 to 12, **characterised in that** a closure element (100), preferably a high speed door, is provided for opening and closing the service opening (30).

14. The storage rack (10) according to any one of claims 10 to 13, **characterised in that** the transport device (80) comprises a first transporting means and a second transporting means, wherein the first transporting means is traversable in a vertical direction (Z) and the second transporting means is traversable in a horizontal direction (X).

15. The storage rack (10) according to any one of claims 10 to 14, **characterised in that** the rack units (20, 40) have carrier supports (74) one above the other and spaced from each other, and arranged in pairs at opposite side walls (70) of the rack units (20, 40) to form a storage space for the storage product.

## Revendications

1. Procédé pour le stockage de marchandises à stocker (110, 120, 130, 140) dans un rayonnage de stockage (10) avec plusieurs unités de rayonnage (20, 40) qui présentent une pluralité de places de stockage pour les marchandises à stocker (110, 120, 130, 140), et avec un puits de transport (60) dans lequel peut être déplacé un dispositif de transport (80) afin de transporter les marchandises à stocker (110, 120, 130, 140) entre une ouverture de service (30) et une place de stockage, dans lequel une première unité de rayonnage (20) comporte l'ouverture de service (30) et une seconde unité de rayonnage (40) est séparée de la première unité de rayonnage (20) par le puits de transport (60), et dans lequel le procédé comprend les opérations suivantes :
a) une première marchandise à stocker (110) à prélever du stockage est convoyée en vue d'un stockage intermédiaire par le dispositif de transport (80) dans une zone tampon (50), à distance de l'ouverture de service (30), d'une unité de rayonnage (20, 40) ;
b) une seconde marchandise à stocker (120) à emmagasiner est amenée au dispositif de transport (80) via l'ouverture de service (30) ;
c) la seconde marchandise à stocker (120) à emmagasiner est convoyée par le dispositif de transport (80) à la zone tampon (50) ;
d) la première marchandise à stocker (110) à prélever du stockage est amenée au moyen du dispositif de transport (80) de la zone tampon (50) à l'ouverture de service (30) ; et
e) la seconde marchandise à stocker (120) à emmagasiner est amenée au moyen du dispositif de transport (80) de la zone tampon (50) à une place de stockage déterminée.

2. Procédé selon la revendication 1, **caractérisé en ce que** la zone tampon (50) est associée à la seconde unité de rayonnage (40) et est prévue essentiellement à la même hauteur que l'ouverture de service (30).

3. Procédé selon la revendication 1 ou 2, **caractérisé en ce que** la zone tampon (50) présente au moins deux places tampon (52, 54).

4. Procédé selon l'une des revendications 1 à 3, **caractérisé en ce que** la zone tampon (50) présente une hauteur (h₂) qui correspond approximativement au double de la hauteur maximale prévue pour la place de stockage.

5. Procédé selon l'une des revendications 1 à 4, **caractérisé en ce que** la hauteur (h₁) de la marchandise à stocker (110, 120, 130, 140) est mesurée.

6. Procédé selon l'une des revendications 1 à 5, **caractérisé en ce que**, dans une opération f), une troisième marchandise à stocker (130) à prélever du stockage est amenée depuis sa place de stockage au moyen du dispositif de transport (80) à la zone tampon (50).

7. Procédé selon l'une des revendications 1 à 6, **caractérisé en ce que** dans une opération g), une quatrième marchandise à stocker (140) à emmagasiner est amenée au dispositif de transport (80) via l'ouverture de service (30)

8. Procédé selon l'une des revendications 1 à 7, **caractérisé en ce qu'**entre deux opérations ou pendant l'une au moins des opérations, un élément de fermeture (100), de préférence une porte à fonctionnement rapide, est ouverte ou fermée pour ouvrir et fermer l'ouverture de service (30).

9. Procédé selon l'une des revendications 1 à 8, **caractérisé en ce que** le dispositif de transport (80) comprend un premier moyen de transport et un second moyen de transport, tels que le premier moyen de transport est déplacé dans une direction verticale (Z) et le second moyen de transport est déplacé dans une direction horizontale (X).

10. Rayonnage de stockage (10) comprenant plusieurs unités de rayonnage (20, 40) qui présentent une pluralité de places de stockage pour le stockage de marchandises à stocker (110, 120, 130, 140), et comprenant un puits de transport (60) dans lequel peut être déplacé un dispositif de transport (80) afin de transporter les marchandises à stocker entre une ouverture de service (30) et une place de stockage, dans lequel une première unité de rayonnage (20) comporte l'ouverture de service (30) et une seconde unité de rayonnage (40) est écartée de la première unité de rayonnage (20) par le puits de transport (60),
**caractérisé en ce qu'**une unité de rayonnage (20, 40) comprend une zone tampon (50) à distance de l'ouverture de service (30) pour le stockage intermédiaire de marchandises à stocker (110, 120, 130, 140), dans lequel la zone tampon (50) est prévue dans la seconde unité de rayonnage (40) et essentiellement à la même hauteur que l'ouverture de service (30), et ladite zone tampon (50) comprend au moins deux places tampon (52, 54).

11. Rayonnage de stockage (10) selon la revendication 10, **caractérisé en ce que** la zone tampon (50) présente une hauteur (h2) qui correspond approximativement au double de la hauteur maximum prévue pour la place de stockage.

12. Rayonnage de stockage (10) selon l'une des revendications 10 ou 11, **caractérisé en ce qu'**un dispositif de mesure de hauteur (90) est prévu dans la région de l'ouverture de service (30) pour détecter la hauteur (h1) de la marchandise à stocker (110, 120, 130, 140).

13. Rayonnage de stockage (10) selon l'une des revendications 10 à 12, **caractérisé en ce qu'**il est prévu un élément de fermeture (100), de préférence une porte à fonctionnement rapide, pour ouvrir et fermer l'ouverture de service (30).

14. Rayonnage de stockage (10) selon l'une des revendications 10 à 13, **caractérisé en ce que** le dispositif de transport (80) comprend un premier moyen de transport et un second moyen de transport, tels que le premier moyen de transport est déplaçable dans une direction verticale (Z) et le second moyen de transport est déplaçable dans une direction horizontale (X).

15. Rayonnage de stockage (10) selon l'une des revendications 10 à 14, **caractérisé en ce que** les unités de rayonnage (20, 40) comprennent des appuis porteurs (74) situés les uns au-dessus des autres et écartés, qui sont agencés par paires sur des parois latérales opposées (70) des unités de rayonnage (20, 40) pour former une place de stockage pour les marchandises à stocker.
